# EUROPEAN PATENT SPECIFICATION

(11) **EP 0 653 132 B1**
(45) Date of publication and mention of the grant of the patent: **02.04.1997**
(21) Application number: 93915742.6
(22) Date of filing: 29.06.1993
(51) Int. Cl.: H04L 12/56, H04Q 11/04

(54) **LOCAL OR/AND TRANSIT EXCHANGE FOR A BROADBAND COMMUNICATION NETWORK**
ORTS- ODER/UND DURCHGANGSVERMITTLUNG FÜR EIN BREITBANDKOMMUNIKATIONSNETZ
CENTRAL LOCAL ET/OU DE TRANSIT POUR UN RESEAU DE COMMUNICATIONS A LARGE BANDE

(30) Priority: 24.07.1992 IT MI921806
(43) Date of publication of application: 17.05.1995
(73) Proprietor: ITALTEL SOCIETA ITALIANA TELECOMUNICAZIONI s.p.a., 20149 Milano (IT)
(72) Inventor: MORGANTI, Michele, I-20133 Milano (IT); GALLASSI, Giorgio, I-20010 Cornaredo (IT); CANATO, Luigi, I-20036 Meda (IT)
(74) Representative: Giustini, Delio
(86) International application number: EP9301675
(87) International publication number: WO9403004

(56) References cited:
- EP-A- 0 450 819
- EP-A- 0 468 818
- EP-A- 0 488 399
- DIGITALE NACHRICHTENUEBERTRAGUNG, Teil 2, Crossconnect- und Multiplextechnik 1990, SIEMENS AKTIENGESELLSCHAFT BERLIN UND MUENCHEN, pages 26-31,

## Description

### Technical Field

The present invention concerns digital telecommunication networks, and in particular an exchange, which can be local or transit, for telecommunication systems including Broadband (or high bit rate) Integrated Service Digital Network, briefly indicated as B-ISDN.

The invention regards more in particular an exchange provided with a Central ATM Fabric suitable to switch voice signals (and/or data) as well as narrowband ISDN signals, and according to the invention it includes means able to handle B-ISDN traffic, celled traffic, synchronous or SDH (Synchronous Data Hierarchy) traffic and/or mixed traffic. In order to overcome certain restrictions of the current digital telecommunication networks providing plesiochronous type data transmission, there has recently been a proposal for a digital synchronous (SDH) transmission technique.

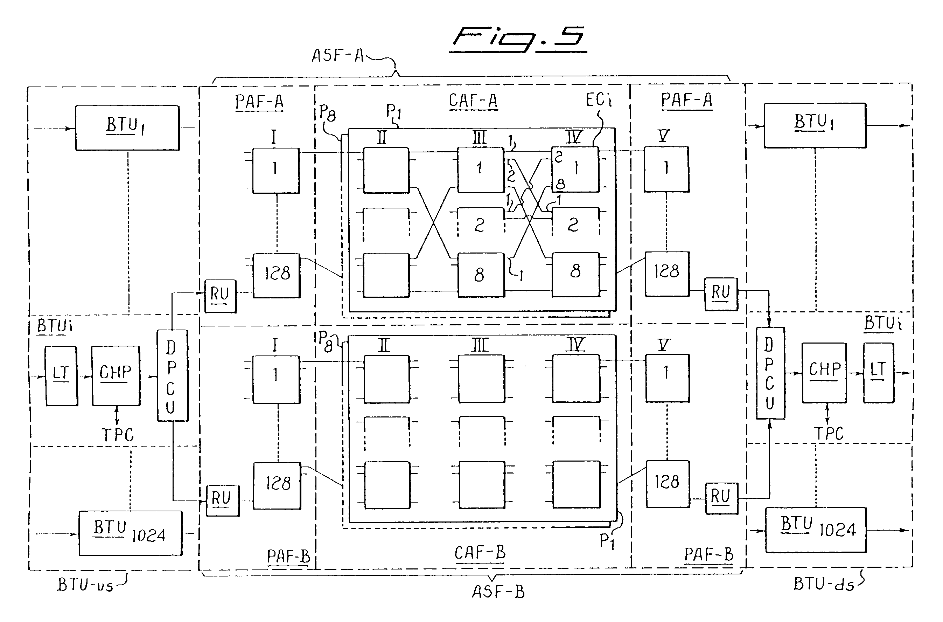

As shown in figure 4, the SDH technique provides a frame structure of the module or basic level STM-1 shaped by a matrix of 9 rows and 270 columns which elements consist of bytes, each of it set up by 8 bits, which expands row by row, from left to right and from top to bottom. The frame has a duration of 125 µs and so the gross transmission capacity of the basic module is 155.520 Mbit/s.

The first nine columns of the frame (SDH) are dedicated to the overhead functions, as for example the alignment of the frame, the monitoring of the error and the auxiliary data channels. The remaining 261 columns make up the payload. In the multiplexing SDH each of the tributaries (plesiochronous and synchronous) are processed before entering the payload of the STM-1 module in such a way to form virtual containers (VC) setting up the synchronous signal (in frequency) with the aggregate STM-1 flow. The different virtual containers as a whole form the so called VC-4.

When introducing broadband services it will be necessary to integrate the subscriber's access in the narrowband services as well as in the broadband ones. However, as the narrowband subscribers will be in the majority for a considerable time, it will be necessary to maintain and even to extend the narrowband services, and the same considerations are valid for the trunk lines.

As a consequence the evolution in the direction of broadband will occur through the progressive fusion of elements of the existing network with elements of the final broadband network, for example by adding broadband modules to N-ISDN exchanges (narrowband).

### Background Art

Until now only exchanges having N-ISDN switching matrixes and exchanges having B-ISDN switching matrixes were offered, being "normally" only provided with N-ISDN and B-ISDN inputs, respectively.

In the case where SDH traffic contains at the same time (at least) one N-ISDN type virtual container (PDH) and at least one B-ISDN virtual container (SDH), it will be necessary to provide the two networks N-ISDN and B-ISDN with a separation device, i.e. a device normally called DCC (Digital Cross Connect) upstream the input of the exchange. In addition to the problems of complexity and costs this arrangement presents a considerable rigidity with respect to future generations of communication networks.

EP 450.819 discloses an arrangement for switching broadband ISDN packets and comprises a broadband packet switch connected to broadband ISDN customers and to a narrowband switch via an interface unit. Broadband ISDN control packets are connected by the broadband packet switch to the narrowband switch which transmits them to a control unit. The control unit respond to control messages by controlling the broadband packet switch, the interface means and the narrowband switch to selectively interconnect B-ISDN and narrowband customers.

### Objects of the Invention

It is the object of the present invention to modify and improve the performances of an exchange provided with an N-ISDN switching network in such a way to enable it to handle also B-ISDN traffic, without any inconvenience for the flexibility and at the same time without running into expensive duplications and complications.

Preferably and as will be shown in the following description the basic exchange is an exchange manufactured by the Applicant, called UT 100 which in this way will be transformed in an integrated and flexible exchange, suitable to manage also broadband traffic. In particular for example, the exchange upgraded according to the invention, permits to handle mixed flows at the level of exchange modules, where virtual channels VC of different types are present, for example one of the isochronous type (PDH) and another of the ATM type. Such function will rather be implemented by one or more integrated circuits.

### Summary of the Invention

According to the invention these objectsare achieved in an exchange for telecommunication systems of the type including a switching fabric and at least one peripheral module including a narrowband termination unit which receives ISDN narrowband channels, and a first peripheral ATM fabric network suitable to switch isochronous type narrowband traffic (not celled), connected to the said narrowband termination unit, characterized in that the said switching fabric includes also a central ATM fabric for the switching of broadband signals, and by the fact that the above mentioned peripheral module includes also:
- a broadband termination unit able to receive:
   i. broadband lines supporting ATM cell flows;
   ii. broadband lines supporting isochronous or SDH flows;
   iii. broadband lines supporting mixed flows including flows of the isochronous hierarchy as well as ATM cells;
a second peripheral ATM fabric for the switching of celled traffic and connected to the above mentioned broadband termination unit.

As a further advantage the said peripheral module includes also an interworking unit connected between the first and second mentioned peripheral ATM fabric suitable to convert the celled traffic arriving from the said second peripheral ATM fabric into isochronous traffic at 2 Mbit/s and also suitable to convert the isochronous traffic arriving from the first peripheral ATM fabric into celled traffic.

Within the exchange according to the invention the switching network is realized by self-routing switching elements of the type shown in the European patent application Nr. 90917705.2 with the title "Basic element for the connection network of a fast packet switching node", and uses in the first stages the principle of random distribution in order to be able to absorb easily even considerable load fluctuations; in order to guarantee the correct sequence order of the outgoing cells, a block is used (of the type shown in the PCT application No. PCT/EP92/02565) to resequence the cells according to a principle of a maximum delay equalization.

A further characteristic deriving from the topology of the switching network consists in a facility for the establishment of the call as the informations related to the routing of the cells in the last (3) stages are univocally defined by the output ET (Exchange Termination) identifier.

The features of the present invention which are believed to be novel are set forth with particularity in the appended claims.

### Detailed Description of the Drawings

The invention, together with further objects and advantages thereof, may best be understood by making reference to the following description taken together with the accompanying drawings, in which reference numerals identify the elements, and where in:
figure 1 is a diagram of the exchange realized according to the present invention;
figure 2 shows in details the broadband module MBB of figure 1 realized according to the present invention;
the figures 3A, 3B, 3C and 3D illustrate schematically possible streams managed by the exchange according to the present invention;
figure 4, already illustrated, shows schematically the structure of the frame included in the SDH systems;
figure 5 shows in a more detailed way the constitutive structure of the MBB and CAF modules of figure 1; and
figure 6 shows in a more detailed way the structure of the line termination module of figure 5.

### Detailed Description of a Preferred Embodiment

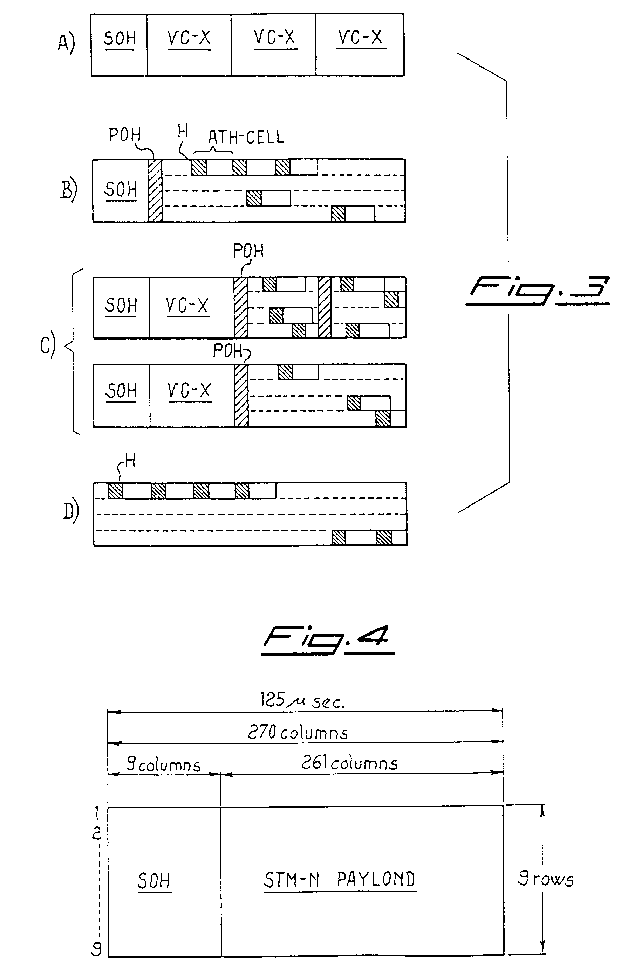

With respect to those figures and initially to the figures 3A - 3C the frame structure of an SDH system of 150 Mbit/s is shown in more details. The SDH technique is based on Synchronous Transport Modules STM, where synchronous transport module is understood as an informative structure being able to support the connection at section level in the SDH system. The STM includes section header fields (SOH) and payload fields arranged in a block structure which are repeated every 125 µs. In the SDH multiplexing in order to create the basic module STM-1 each one of the tributary flows is processed before entering the payload of the STM-1 module in a way to create the so called Virtual Containers.

The virtual container (VC) is an informative structure suitable for the information transport including a payload field called container and a header field suitable to control the integrity of the informative stream. The VCs can be of higher order (Higher Order: VC-4, VC-3) or of lower order (Lower Order: VC-2, VC-1). According to the typology of the informative flow transported in the container some bytes of this may not be used and are called stuff. The frames are created by a part of normalized auxiliary data OH (Over Head) for the maintenance and by a usable part formed by one or more virtual containers VC. More precisely figure 3A shows an STM-1 frame (Synchronous Transport Module) with containers VC-x all of the same type, while figure 3B shows an STM-1 frame containing only ATM cells and indicated in the figure by the wording ATM CELL, where the header H is indicated by a hatched line inclined towards the left side. Figure 3C illustrates instead two examples of STM-1 frames which can be managed by the exchange according to the invention; these frames are of the mixed type as they contain flows of the synchronous hierarchy (container VC-X) as well as ATM cells allocated in one or more containers preceded by bytes indicating the container header and illustrated in figure 3B and 3C by a hatched line inclined towards the right side. Figure 3D shows on the other hand an informative stream consisting of ATM cells which are not transported by means of the STM-1 frame.

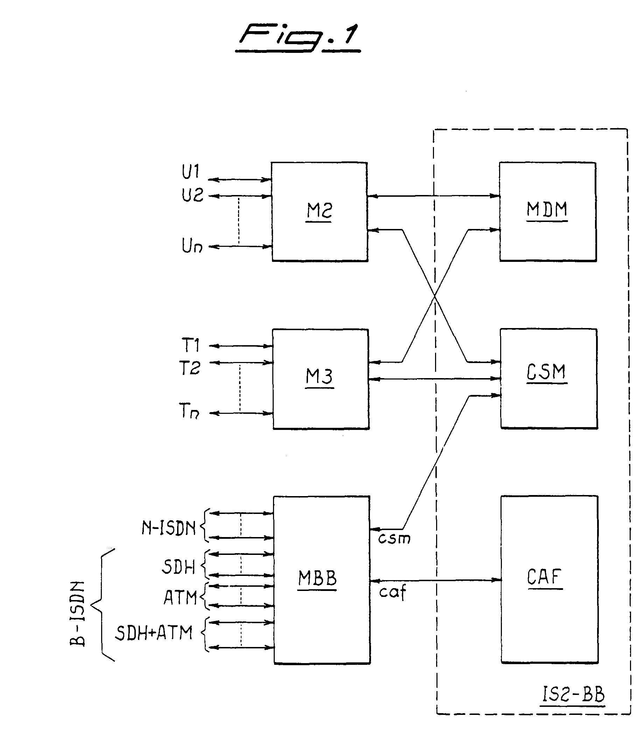

The schematically illustrated exchange in figure 1 is of the type known as UT 100 and includes an interconnection structure called IS2-BB to which a plurality of peripheral modules are connected. Such exchange is also illustrated in the report by G. Barberis, U. Ferrari and G. Magnolfi "Progress on the Development and Introduction of ISDN in the LINEA UT", Stockholm, International Switching Symposium 1990.

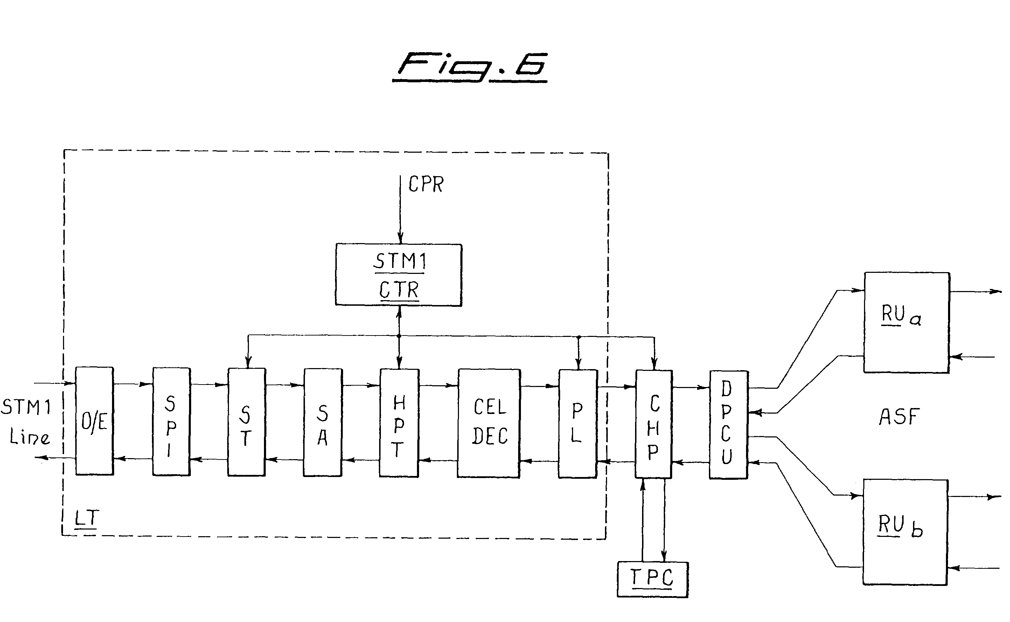

In particular the interconnection structure IS2-BB includes:
- a circuit switching module CSM suitable for the switching of voice and/or data signals;
- one or more MDM modules for the distribution of the messages which provide for the switching of the signaling and illustrated in details in the European patent nr. 235.406 B1 entitled: "Network for Message Switching between a Plurality of Processing Units";
- one CAF module (Central ATM Fabric) which provides for the switching of the ATM cells and which is realized by the combination of a plurality of BASE elements (see also figure 5) of the type illustrated in the above mentioned European patent application Nr. 90917005.2.

To the interconnection structure IS2-BB can be connected:
- M2 modules where access user lines U1, ....Un are accepted;
- M3 modules where trunk lines T1,....,Tn are accepted;
- broadband modules MBB able to receive
   i. narrowband terminations N-ISDN supporting isochronous traffic (not celled);
   ii. broadband terminations supporting the ATM cell traffic not based on STM-1 transmission medium (see figure 3D);
   iii. broadband terminations supporting isochronous or SDH traffic (see figure 3A);
   iv. terminations supporting in an integrated way mixed traffic of the isochronous or SDH type as well as of the ATM cell based on the transmission medium STM1 (see figure 3C).

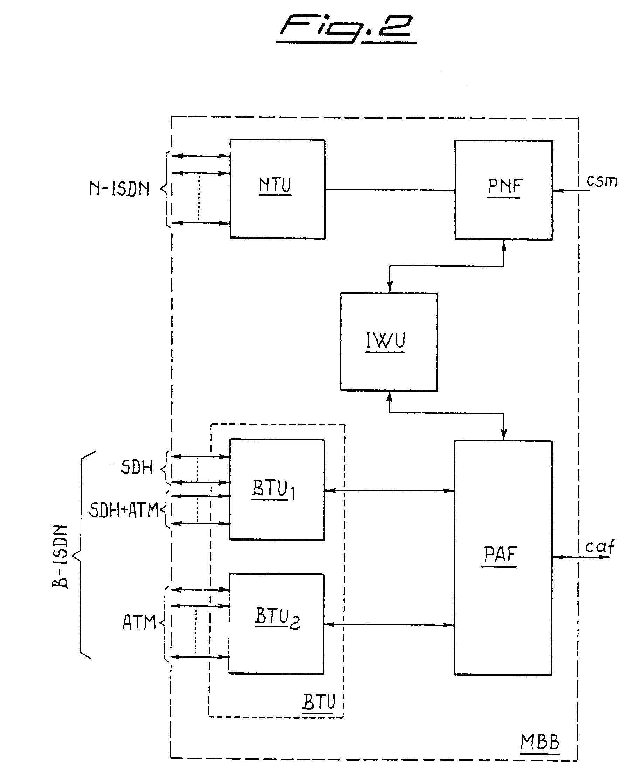

Figure 2 illustrates in a more detailed way a broadband module MBB suitable as specified above to interface broadband services, narrowband services and mixed services. For this purpose the MBB module includes a narrowband termination unit NTU having the output connected to a PNF block (Peripheral Narrowband Fabric) which handles the isochronous type traffic (not celled) and which is connected to said circuit switching module CSM through the csm connection. The above mentioned units are known and pointed them out in order to show their correlation with the innovative part which is the subject of the present invention.

According to the invention the peripheral broadband module includes moreover a broadband termination unit BTU including a first BTU1 unit accepting at least a line supporting isochronous or SDH traffic (see also figure 3A), at least a line supporting ATM cells based on STM-1 (see also figure 3B), and at least a line supporting mixed type traffic or of the type illustrated in figure 3C. The BTU unit includes moreover a second BTU2 unit accepting lines supporting only ATM celled traffic being not based on STM-1 (see figure 3D). The units BTU1 and BTU2 are connected to a Peripheral ATM Fabric PAF handling ATM celled type traffic and to which output a CAF block is connected. Moreover an Interworking Unit (IWU) converts on the way from PAF to PNF the cells into isochronous traffic at 2 Mbit/s, while it converts in the opposite case the isochronous traffic (at 2 Mbit/s transporting isochronous services at 64 Kbit/s) into cells.

In other words the BTU termination allows the "broadband" subscriber to enter the narrowband units of the exchange and vice versa.

Each MBB module may contain up to four BTU units (and respective IWU units), to each of which at least one 155 Mbit/s link is attached, or in alternative one single BTU to which at least one 600 Mbit/s link is attached.

The BTU unit forms an exchange termination and in the following part of the description the terms ET and BTU are used with the same meaning.

According to the invention the BTU unit performs the functions of transmission and of ATM level such as the supervision of the traffic, the processing of the ATM cell header, it carries out the conversion between the two types of external and internal cell format (CCITT and "proprietary" format) and the adjustment between the speeds on the line and the speeds inside the exchange.

Now we refer in particular to figure 5 illustrating the broadband part of the exchange. Such description is not in a bidirectional form, rather it uses repeated components around the fabric ASF (set up together by the PAF and CAF units mentioned above), which is duplicated for reliability reasons, i.e. it consists of two identical parts ASF-A and ASF-B. Consequently the unduplicated components of the BTU have been marked by us (upstream) or by ds (downstream).

The switching fabric ASF is unfolded and consists of switching elements distributed on five stages (I, II, III ..., V) and preferentially on eight switching planes (P1,....., P8) interconnected as follows, bearing in mind that the first and last stage are part of the peripheral ATM fabric PAF while the three central stages are part of the central ATM fabric CAF. Referring to figure 5 each element of the last stage (V) is connected to the output of the last but one stage characterized by the same serial number in the ambit of the same plane P; each element of the last but one stage (IV) is at its turn connected to the outputs of the elements of the preceding stage, inside the same central plane, identified by the same number.

In other words taking into consideration the last but one stage the switching element ECi shows its first input 1 connected to the first output 1 of the preceding element, the second input 2 connected to the first output of the second switching element of the preceding stage and so on until the eighth input is connected to the first output of the eighth element of the preceding stage.

With this configuration each output ET can be reached starting from whatever element of the central stage (III) by paths concerning outputs which for the same stage have anyhow the same number, even if the may belong to different elements. The interconnection ASF is set up by several stages (for example 5) of which preferably the first (two) are suitable to route the cells in a random way in order to reduce the possibility of overloads, while the last stages direct the cells in a deterministic way in accordance with the routing tag associated to the stage, being that value contained in the header of the cell in the characteristic internal format of the system. A switching element suitable to set up a network of this type is illustrated in details in the Italian application No. MI92A 001232, in the name of the Applicant.

The peripheral access fabric (PAF) is realized through a matrix of 128 switching elements having in the specific case 8 inputs and 8 outputs. According to a preferred embodiment of the invention it is possible to use a switching element of the 16 x 16 type illustrated in the above mentioned patent application, where 8 outputs (connected to the CAF) are used for the subscriber's traffic service while some of the 8 unused outputs will be employed for the signaling message exchange through a layered structure normally including some servers. The cells belonging to this type of traffic are therefore routed in a deterministic way by the first stage.

Between the PAF and the BTU, resequencing units RU are connected for the correct reordering of the cells. Units of this type are illustrated in details in the PCT Application No. PCT/EP92/02565 entitled "Method and unit for the reconstruction of the correct sequence of ATM cells" in the name of the Applicant.

With regard to the above mentioned and always referring to a preferred but not restrictive embodiment of the invention, and considering that the PAF matrix includes 128 switching elements with 8 inputs, the exchange according to the invention can accept 1024 BTU units (ET), one of those being illustrated in details.

The BTUi unit includes a Dual Path Control Unit (DPCU),shown in details in the Italian Patent Application No. MI93A001001, in the name of the Applicant, which applies principal of redundancy to improve the reliability of the switching network.

DPCU unit doubles, in the upstream us part, each cell and supply such cells on both the interconnections ASF-A and ASF-B with a suitable sequence character. In the downstream ds part the DPCU unit selects one of the two cells at the output of the switching fabric according to a predeterminated selection parameters, rejecting the cell arriving from the other part.

The cells are fed to the DPCU by a Cell Header Processor (CHP) performing on the cells standard operations at ATM level and operations suitable to transform the CCITT ATM format into a specific format (proprietary format) fit for the processing in the switching fabric and in the ET (BTU), and suitable to transform in the downstream part the proprietary format into the CCITT ATM format.

In the CHP the so called label switching is carried out, that means the value conversion of the VCI and VPI which identify the cell on the input link to those which identify it on the output link.

According to the invention the label translation is carried out in the output ET (BTU), but it is avoided to transport the old value of VCI/VPI, which will not be used by the connection network , in the cell. For this purpose inside the cell an identifier valid in the system is transported which is obtained by a compression of the values defining (through suitable conversion tables) the values VPI/VCI according to the maximum number of simultaneously active connections.

More precisely the (compressed) identifier of the connection valid in the output ET (BTU) is codified in the cell by the CHP of the input ET and then used in the output ET in order to get the new VCI/VPI values. In this way even other functional blocks of the output ET, which operate on the cell according to the matching connection (for example the DPCU), can use the internal identifier included in the cell for the direct routing of the data interested in, without being obliged to make each time an operation of VPI and VCI value compression. Besides that the VPI value (consisting for example of 8 or 12 bit) which has no more validity inside the network, is not transported into the cell, improving in this way its efficiency of use. To the CHP unit a TPC (Traffic Parameter Control) unit is connected suitable to keep under control one or more traffic parameters negotiated between the subscriber and the network management. A device of this kind is shown in the PCT Application No. WO93/03564 entitled "Method and unit for the control of the cell flow in a telecommunication system according to the ATM technique" and in the PCT Application No. PCT/EP92/02652 entitled "Disposition of a plurality of policing units for the policing of cell flow traffic parameters in an ATM switching network, and relating method".

The CHP unit receives the cells arriving from a line terminator LT which structure will now be illustrated in a more detailed way referring to figure 6 which is a scheme of the folded bidirectional type.

Figure 6 illustrates in details the line terminator LT from where the informative flow arrives as a digital optic signal structured like a STM-1 frame. Such informative flow is taken to an optical-electric converter O/E in a code known as CMI. The converter is followed by an SDH type physical interface SPI which is in charge of the timing, etc. The following ST block of section termination carries out the analyses of the informations included in the (SOH) section overhead part. The section adaptation block SA aligns the internal clock with that of the frame and is followed by a Higher Order Path Termination HPT able to add the corresponding POH (in the upstream us direction), or to cut off the corresponding POH (in the downstream ds direction), to/from the virtual containers VC.

According to the invention a cellization-decellization (CEL/DEC) device which carries out standard operations of virtual container adaptation of higher order, and starting from the synchronous frame structured by bytes, obtains a frame set up by cells of a fixed dimension of 53 bytes. In particular the CEL/DEC device operates as well on synchronous frames (SDH) which contain only virtual containers (VC) of the synchronous hierarchy (for example figure 3A) or only ATM cells (figure 3B), but even on frames of whatever mixed configuration including VCs of the synchronous hierarchy as well as ATM cells (for example figure 3C). A device of that type is for example described in the Italian Patent Application No. MI92A 001807 in the name of the Applicant.

Finally the PL block realizes alignment operations on the ATM flow, the check of the ATM cell header and the descrambling of the payload as well as the extraction of the idle cells. At the output of the PL block there is a flow of cells valid at ATM level (standard CCITT format ) which is taken to the cell header processor (CHP) and to the already examined control unit DPCU.

A STM1-CTR controller is connected on one side to the ST, CEL/DEC, PL and CHP units, and on the other side to the control processor CPR which is not shown.

Referring once again to figure 2 the MBB unit includes moreover a BTU2 unit receiving the ATM flow of 155 Mbit/s which is not arranged in the STM-1 frame like that indicated in figure 3D. The BTU2 unit has a structure which does not provide the functions typical for SDH transmission systems, and for that purpose the corresponding LT unit includes the above illustrated units with reference to figure 6 with the exception of the ST, SA, HPT and CEL/DEC units.

The PAF function following the adjustment operations carried out on informations by the BTU1 and BTU2 units realizes the following switching operations.

On the input side it switches:
- the cells corresponding to ATM traffics in direction of the CAF block;
- the cells corresponding to ≥ 2Mbit/s isochronous traffics towards the CAF block;
- the cells corresponding to the isochronous traffics of 2 Mbit/s transporting isochronous services at 64 kbit/s in direction of one or more IWU units.
   On the output side the PAF function switches in the direction of the BTU1 unit:
   - the cells corresponding to the ATM traffic arriving from CAF;
   - the cells corresponding to the ≥ 2Mbit/s isochronous traffics arriving from CAF;
   - the cells corresponding to the isochronous traffics of 2 Mbit/s arriving from IWU.

The exchange according to the invention permits to obtain the following advantages.

It allows the switching of (apart from narrowband voice, data and ISDN signals) the flows illustrated in figure 3. The structure is very insensible to informative flows containing load peaks of the burst type and permits to obtain a resequencing of the cells according to an equalization principle at the maximum delay, so that the delay jitter or delay variation at the output of the structure is controlled and minimized.

A further advantage derives from the fact that the routing tags used by the last (3) stages are univocally defined by the output ET, independently from the input ET and the path completed in the first (2) stages of the switching fabric.

## Claims

1. Exchange for telecommunication systems of the type including a switching fabric (ASF) and at least one peripheral module (MBB) including a narrowband termination unit (NTU) which receives ISDN narrowband channels (N-ISDN), and a first peripheral ATM fabric network (PNF) suitable to switch isochronous type narrowband traffic (not celled), connected to the said narrowband termination unit (NTU), characterized in that the said switching fabric includes also a central ATM fabric (CAF) for the switching of broadband signals, and by the fact that the above mentioned peripheral module includes also:
- a broadband termination unit (BTU) able to receive:
i. broadband lines supporting ATM cell flows;
ii. broadband lines supporting isochronous or SDH flows;
iii. broadband lines supporting mixed flows including flows of the isochronous hierarchy (SDH) as well as ATM cells;
a second peripheral ATM fabric (PAF) for the switching of celled traffic and connected to the above mentioned broadband termination unit (BTU).

2. Exchange as claimed in claim 1 characterized by the fact that said peripheral module (MBB) includes also an interworking unit (IWU) connected between the said first and second peripheral ATM fabric (PNF respectively PAF) suitable to convert celled traffic arriving from the said second peripheral ATM fabric (PAF) in isochronous traffic at 2Mbit/s and moreover suitable to convert the isochronous traffic arriving from the said first peripheral ATM fabric (PNF) in celled traffic.

3. Exchange as claimed in claim 1 characterized in that the said broadband termination unit (BTU) includes:
- a first broadband termination unit (BTU1) receiving
i. broadband lines supporting isochronous or SDH flows;
ii. broadband lines supporting mixed flows, which include flows of the isochronous (SDH) hierarchy as well as ATM cells;
iii. broadband lines supporting ATM cells which are transported by the flows of the isochronous (SDH) hierarchy;
- a second broadband termination unit (BTU2) supporting ATM cell flows (not transported by the flows of isochronous hierarchy or SDH).

4. Exchange according to claim 3 characterized in that each one of the said first and second termination unit (BTU1 and BTU2) includes:
- a line termination (LT);
- a cell header processor (CHP) connected to the said line termination (LT) and to a traffic parameter control block (TPC), said cell header processor (CHP) carrying out the label translation operation of VCI and VPI which identify the cell on the link entering the exchange and those identifying it on the outgoing link; and
- a duplicated paths control unit (DPCU) connected to said second peripheral ATM fabric (PAF) controlling the duplicating and recombination of the flows sent to, and arriving from, the switching fabric (ASF).

5. Exchange according to claim 1, characterized in that said second peripheral ATM fabric (PAF) consists of the first and last stage of the switching fabric (ASF) and includes moreover a resequencing units (RU) for the correct reordering of the cells at the output of the switching fabric (ASF).

6. Exchange according to claim 1 characterized in that said switching fabric (ASF) includes two identical and simultaneously independently operating parts, each one of the two parts (ASF-A, ASF-B) realized with switching elements where the input of one element of the last stage (V) are connected to output of said central ATM fabric (CAF) having the same order number inside the plane; each element of the last but one stage (IV) being at its time connected to outputs of the elements of the previous stage inside the same central plane identified by the same number.

7. Exchange according to claim 4 characterized in that said line termination (LT) includes:
- an optical-electric converter unit (O/E) receiving the optical signal STM-1;
- a timing interface unit (SPI) connected to said optical-electric converter (O/E);
- a section termination unit (ST), connected to said timing interface (SPI), able to perform the analysis of the informations included in the section overhead part (SOH);
- a section adaptation unit (SA), connected to said section termination unit (ST), able to perform the alignment of the internal clock to the frame clock;
- a higher order path termination unit (HPT), connected to said section adaptation unit (SA) able to add, or to cut off, the corresponding POH to/from the virtual containers (VC);
- a cellization/ decellization device (CEL/CEC) connected to said higher order path termination unit (HPT); and
- a physical layer unit (PL) connected to said cellization/decellization device (CEL/DEC) to implement the ATM cell alignment, the check for the correctness of the header of the ATM cells and the descrambling of the cell payload as well as the extraction of the idle cells.

8. Exchange according to claim 4 characterized in that said line termination (LT) includes:
- an optical-electric converter unit (O/E) receiving the optical signal STM-1;
- a timing interface unit (SPI) connected to said optical-electric converter (O/E);
- a physical layer unit (PL) to implement the ATM cell alignment, the check for the correctness of the header of the ATM cells and the descrambling of the cell payload as well as the extraction of the idle cells and the management of the operation and maintenance flows at physical level.

9. Exchange according to claim 4 characterized in that the label translation of VCI/VPI is carried out in the output broadband termination unit (BTU) after substitution of the preceding values of VCI/VPI, in the input broadband termination unit (BTU), with an identifier obtained by compression of the previous VPI/VCI values.

## Patentansprüche

1. Vermittlung für die Art von Telekommunikationsnetze, welche eine Vermittlungsstruktur (ASF) und mindestens ein peripherisches Modul (MBB) samt einer Schmalbandendeinheit (NTU) umfaßt, wobei letztere ISND Schmalbandkanäle (N-ISDN) empfängt, sowie ein erstes peripherisches ATM-Strukturnetz (PNF), daß geeignet ist, Schmalbandtelefonverkehr vom isochronen Typ (nicht zellstrukturiert) zu vermitteln, in Verbindung mit der genannten Schmalbandendeinheit (NTU), dadurch gekennzeichnet, daß die genannte Vermittlungsstruktur auch eine zentrale ATM-Struktur (CAF) für die Vermittlung von Breitbandsignalen einschließt, und dadurch, daß das oben genannte peripherische Modul auch folgendes umfaßt:
- eine Breitbandendeinheit (BTU), die geeignet ist, folgendes zu empfangen:
i. ATM-Zellströme übertragende Breitbandleitungen;
ii. isochrone oder SDH-Ströme übertragende Breitbandleitungen;
iii. Breitbandleitungen, die gemischte Ströme einschließlich Ströme der isochronen Hierarchie (SDH) wie auch von ATM-Zellen übertragen;
- eine zweite peripherische ATM-Struktur (PAF) zur Vermittlung von zellstrukturiertem Telefonverkehr und verbunden mit der obengenannten Breitbandendeinheit (BTU).

2. Vermittlung nach Anspruch 1, dadurch gekennzeichnet, daß das genannte peripherische Modul (MBB) auch eine zwischen die genannte erste und zweite peripherische ATM-Struktur (PNF beziehungsweise PAF) gekoppelte Interworking-Einheit (IWU) einschließt, die geeignet ist, von der genannten zweiten ATM-Struktur (PAF) ankommenden zellstrukturierten Telefonverkehr in isochronen Verkehr mit 2Mnit/s umzuwandeln, und das es darüberhinaus den von der genannten ersten peripherischen ATM-Struktur (PNF) ankommenden isochronen Verkehr in zellstrukturierten Verkehr umzuwandeln.

3. Vermittlung nach Anspruch 1, dadurch gekennzeichnet, daß die genannte Breitbandendeinheit (BTU) folgendes einschließt:
- eine erste Breitbandendeinheit (BTU1), die folgendes empfängt:
i. Breitbandleitungen, die isochrone oder SDH Ströme übertragen;
ii. Breitbandleitungen, die gemischte Ströme übertragen, welche Ströme der isochronen (SDH) Hierarchie wie auch von ATM-Zellen einschließen;
iii. Breitbandleitungen, die ATM Zellen übertragen, welche durch Ströme der isochronen (SDH) Hierarchie transportiert werden;
- eine zweite Breitbandendeinheit (BTU2 ), die ATM Zellströme trägt (welche nicht durch die Ströme der isochronen Hierarchie oder SDH transportiert werden).

4. Vermittlung nach Anspruch 3, dadurch gekennzeichnet, daß jede der genannten ersten und zweiten Endeinheiten (BTU1 und BTU2) folgendes einschließt:
- eine Leitungsendstufe (LT);
- einen Zellkopfprozessor (CHP) verbunden mit einer Leitungsendstufe (LT) und mit einem Verkehrsparametersteuerblock (TPC), wobei der genannte Zellkopfprozessor (CHP), der die Kenncodeübersetzungsfunktion von der Werte VCI und VPI ausführt, welche die Zelle in der Verbindung identifizieren, die in die Vermittlung eintritt, mit jenen, die sie auf der Ausgangsverbindung identifizieren; und
- eine Doppelwegsteuereinheit (DPCU) verbunden mit der genannten zweiten peripherischen ATM Struktur (PAF), die das Verdoppeln und Neuzusammenstellen der zur Vermittlungseinheit (ASF) übertragenen oder von ihr ankommenden Ströme steuert.

5. Vermittlung nach Anspruch 1, dadurch gekennzeichnet, daß die genannte zweite peripherische ATM-Struktur (PAF) aus der ersten und letzten Stufe der Vermittlungsstruktur (ASF) besteht und darüberhinaus eine Wiedereinordnungseinheit (RU) einschließt, welche das korrekte Wiederzusammenstellen der Zellen am Ausgang der Vermittlungsstruktur (ASF) übernimmt.

6. Vermittlung nach Anspruch 1, dadurch gekennzeichnet, daß die genannte Vermittlungsstruktur (ASF) zwei identische und simultan unabhängig von einander funktionierende Teile umfaßt, wobei jedes der beiden Teile (ASF-A, ASF-B) durch Vermittlungselementen verwirklicht wurde, in denen die Eingänge eines Elements der letzten Stufe (V) mit Ausgängen der genannten zentralen ATM-Struktur (CAF) mit der selben Eingabenummer innerhalb der Stufe verbunden sind; jedes Element der vorletzten Stufe (IV) ist seinerseits mit den Ausgängen der Elemente der voraufgegangenen Stufe innerhalb der selben zentralen Ebene gekoppelt, wobei die genannten Ausgänge durch die selbe Zahl identifiziert werden.

7. Vermittlung nach Anspruch 4, dadurch gekennzeichnet, daß das genannte Leitungsende (LT) folgendes einschließt:
- eine optisch-elektrische Konvertereinheit (O/E), die das optische Signal STM-1 empfängt;
- eine Zeitschnittstelleneinheit (SPI) verbunden mit dem genannten optisch-elektrischen Konverter (O/E);
- eine Sektionsendeinheit (ST) verbunden mit der genannten Zeitschnittstelle (SPI), die geeignet ist, die Analyse der im Sektionsoverheadteil (SOH) enthaltenen Informationen durchzuführen;
- eine Sektionsanpassungseinheit (SA), verbunden mit der genannten Sektionsendeinheit (ST), die geeignet ist, den Abgleich des inneren Takts mit dem Rahmentakt durchzuführen;
- eine Laufbestimmungseinheit höherer Ordnung (HPT), verbunden mit der genannten Sektionsanpassungseinheit (SA), die geeignet ist, das entsprechende POH dem virtuellen Container (VC) hinzuzufügen oder von diesem abzutrennen;
- eine Vorrichtung zur Zellstrukturierung/Zellauflösung (CEL/DEC) verbunden mit der genannten Laufbestimmungseinheit höherer Ordnung (HPT), und
- eine physische Schicht (PL), verbunden mit der genannten Vorrichtung zur Zellstrukturierung/Zellauflösung (CEL/DEC) zur Durchführung der ATM-Zellabgleichung, der Überprüfung der Richtigkeit der Header der ATM-Zellen und der Entwürfelung der Payload der Zelle, sowie der Entnahme leerer Zellen.

8. Vermittlung nach Anspruch 4, dadurch gekennzeichnet, daß das genannte Leitungsende (LT) folgendes einschließt:
- eine optisch-elektrische Konvertereinheit (O/E), die das optische Signal STM-1 empfängt;
- eine Zeitschnittstelleneinheit (SPI) verbunden mit dem genannten optisch-elektrischen Konverter (O/E);
- eine physische Schicht (PL) zur Durchführung der ATM-Zellanordnung, der Überprüfung der Richtigkeit des Headers der ATM-Zellen und der Entwürfelung der Payload der Zellen, sowie der Entnahme von leeren Zellen und der Steuerung Funktions- und Wartungsströme auf physischem Niveau.

9. Vermittlung nach Anspruch 4, dadurch gekennzeichnet, daß die Kenncodeübersetzung von VCI/VPI in einer Ausgangsbreitbandendeinheit (BTU) durchgeführt wird, nach dem Austausch der vorhergehenden Werte von VCI/VPI in der Eingangsbreitbandendeinheit mit einem Identifizierer, den man durch Kompression der voraufgegangenen VPI/VCI Werte erhält.

## Revendications

1. Central pour des systèmes de télécommunications du type, qui comprend un réseau de commutation (ASF) et au moins un module périphérique (MBB) comprenant une unité de terminaison a bande étroite (NTU), qui reçoit des canaux à bande étroite ISDN (N-ISDN), et un premier réseau de structure ATM périphérique (PNF) apte à commuter du trafic du type isochrone (non à cellules), relié à la dite unité de terminaison à bande étroite (NTU), caractérisé en ce que la dite structure de commutation comprend aussi une structure ATM centrale (CAF) pour la commutation de signaux à large bande, et en ce que le module périphérique mentionné ci-dessus comprend aussi:
- une unité de terminaison à large bande (BTU) apte à recevoir:
i. des lignes à large bande, qui supportent des courants de cellules ATM;
ii. des lignes à large bande, qui supportent des courants isochrones ou de SDH;
iii. des lignes à large bande, qui supportent des courants mixte comprenant des courants de la hiérarchie isochrone comme aussi de cellules ATM;
une deuxième structure périphérique ATM (PAF) pour la commutation de trafic à cellules et reliée à l'unité de terminaison à large bande (BTU) mentionnée ci-dessus.

2. Central selon la revendication 1, caractérisé en ce que le dit module périphérique (MBB) comprend aussi une unité d'interworking (IWU) connectée entre la dite première et deuxième structure ATM périphérique (respectivement PNF et PAF) aptes à convertir un trafic à cellules arrivant de la dite deuxième structure périphérique ATM (PAF) en trafic isochrone à 2Mbit/s et en plus aptes à convertir le trafic isochrone en provenance de la dite première structure périphérique ATM (PNF) en trafic à cellules.

3. Central selon la revendication 1, caractérisé en ce que la dite unité de terminaison à large bande (BTU) comprend:
- une première unité de terminaison à large bande (BTU1), qui reçoit:
i. des lignes à large bande, qui supportent des courants isochrones ou SDH;
ii. des lignes à large bande supportant des courants mixtes, qui comprennent des courants de l'hiérarchie isochrone (SDH) comme des cellules ATM;
iii. des lignes à large bande, supportent des cellules ATM, qui sont transportées par des courants de l'hiérarchie isochrone (SDH).
- une deuxième unité de terminaison à large bande (BTU2), qui supporte des courants de cellules ATM (non transportés par des courants d'hiérarchie isochrone ou SDH).

4. Central selon la revendication 3, caractérisé en ce que chacune de la dite première et deuxième unité de terminaison (BTU1 et BTU2) comprend:
- une terminaison de ligne (LT);
- un processeur d'en-tête de cellule (CHP) relié à la dite terminaison de ligne (LT) et à un bloc de contrôle de paramètres de trafic (TPC), le dit processeur d'en-tête de cellule (CHP) effectuant l'opération de conversion des valeurs de VCI et VPI, qui identifient les cellules sur la connexion, qui entre le central, et celles, qui l'identifient sur la connexion en sortie, et
- une unité de contrôle des parcours doublés (DPCU) reliée à la dite deuxième structure périphérique ATM (PAF), qui contrôle le doublage et la recombinaison des courants envoyés vers et provenants de la structure de commutation (ASF).

5. Central selon la revendication 1, caractérisé en ce que la dite deuxième structure périphérique ATM (PAF) consiste en la première et dernière section de la structure de commutation (ASF) et comprend en plus des unité de remise en chaîne (RU) pour la correcte remise en ordre des cellules à la sortie de la structure de commutation (ASF).

6. Central selon la revendication 1, caractérisé en ce que la dite structure de commutation (ASF) comprend deux parts identiques, qui fonctionnent de manière simultanée et indépendante, chacune des deux parts (ASF-A, ASF-B) réalisée avec des éléments de commutation, où les entrées d'un élément de la dernière section (V) sont reliées à des sorties de la dite structure centrale ATM (CAF) ayant le même ordre de numéro à l'intérieur du plan; chaque élément de l'avant-dernière section (IV) étant à son tour relié à des sorties des éléments de la section précédente à l'intérieur du même plan central identifié par le même numéro.

7. Central selon la revendication 4, caractérisé en ce que la dite terminaison de ligne (LT) comprend:
- une unité de convertisseur optique-électrique (O/E) recevant le signal optique STM-1;
- une unité d'interface de chronométrage (SPI) reliée au dît convertisseur optique-électrique (O/E);
- une unité de section de terminaison (ST) reliée à la dite interface de chronométrage (SPI) apte à effectuer l'analyse des informations comprises dans la part d'overhead de la section (SOH);
- une unité d'adaptation de la section (SA) reliée à la dite unité de terminaison de la section (ST) apte à aligner l'horloge interne avec l'horloge de trame;
- une unité de terminaison de parcours d'ordre supérieur (HPT) reliée à la dite unité d'adaptation de section (SA) apte à additionner ou de couper le POH correspondant aux/des conteneurs virtuels (VC);
- un dispositif de cellisation/décellisation (CEL/DEC) relié à la dite unité de terminaison de parcours d'ordre supérieur (HPT), et
- une unité de couche physique (PL) reliée au dît dispositif de cellisation/décellisation (CEL/DEC) pour effectuer l'alignement des cellules ATM, le contrôle de l'exactitude de l'en-tête des cellules ATM et le débrouillage du payload de cellule aussi bien que l'extraction des cellules vides.

8. Central selon la revendication 4., caractérisé en ce que la dite terminaison de ligne (LT) comprend:
- une unité de convertisseur optique-électrique (O/E), qui reçoit le signal optique STM-1;
- une unité d'interface de chronométrage (SPI) reliée au dit convertisseur optique-électrique (O/E);
- une unité de couche physique (PL) pour effectuer l'alignement des cellules ATM, le contrôle de l'exactitude de l'en-tête des cellules ATM et le débrouillage du payload des cellules aussi bien que l'extraction des cellules vides et la gestion des courants de fonctionnement et de maintenance au niveau physique.

9. Central selon la revendication 4, caractérisé en ce que la conversion des valeurs de VCI/VPI est effectuée dans l'unité de terminaison à large bande en sortie (BTU) après la remplacement des valeurs précédentes de VCI/VPI dans l'unité de terminaison à large bande en entrée (BTU) avec un identificateur obtenu par la compression des valeurs VPI/VCI précédentes.
